# EUROPEAN PATENT SPECIFICATION

(11) **EP 0 488 977 B1**
(45) Date of publication and mention of the grant of the patent: **22.03.1995**
(21) Application number: 91850295.6
(22) Date of filing: 27.11.1991
(51) Int. Cl.: F24F 13/06, F24F 13/20

(54) **A heat-exchange arrangement**
Wärmetauschanordnung
Dispositif d'échange de chaleur

(30) Priority: 28.11.1990 SE 9003788
(43) Date of publication of application: 03.06.1992
(73) Proprietor: SOFT CONSTRUCTION AKTIEBOLAG, S-115 22 Stockholm (SE)
(72) Inventor: Sellö, Bengt, S-115 22 Stockholm (SE)
(74) Representative: Sundström, Per Olof

(56) References cited:
- EP-A- 0 287 546
- DE-A- 2 304 785
- DE-A- 2 551 078
- DE-A- 3 017 431
- DE-A- 3 030 778
- US-A- 3 331 305

## Description

The present invention relates to a ceiling-installed heat-exchange arrangement intended for attemperating room air and being of the kind defined in the preamble of the following Claim 1.

Such heat-exchange arrangements comprise a heat-exchange unit which includes an elongated heat-exchanger constructed from horizontal cooling-water conducting pipes provided with surface enlarging fins, and vertical screen plates which are disposed on each long side of the elongated heat-exchanger and which extend downwardly from said heat-exchanger such as to define an effective convection height for the air cooled in said unit, and a lower fixedly connected screen unit which distributes the cooled air.

Conventional installations of the aforesaid kind are manufactured from prefabricated standard units which have a substantially constant cross-section with a given heat-exchange effect per unit of length, and a length dimension which is adapted to the room climate desired at that time. The heat-exchangers are therewith made available in given standard lengths. The present standpoint of techniques is represented bythe disclosures made, for instance, in SE-A-431 240 and SE-A-460 923 (or EP-A-0 287 546).

The heat-exchange arrangement is normally installed at an early stage in the construction of a building.

It has been found difficult to subsequently increase the heat-exchanging capacity of the arrangement, and it has also been found difficult to maintain a fresh, attractive appearance of the visible parts of the heat-exchanger up to the time of completion of the building construction work, i.e. up to the time when the building is finally inspected.

Furthermore, it has been found difficult to arrange heat-exchangers uniformly in a given room. The heat-exchangers normally have a standard design with a given heat-exchange effect per unit of length, wherewith, for instance, the cooling requirements of a room may mean that the requisite total heat-exchanger length will be considerably shorter than the corresponding room dimensions, and that connecting pipes leading to the heat-exchange arrangement shall be connected from the upper part of one of the walls in the room. The heat-exchange arrangement is then preferably placed in an excentric position, in the vicinity of the pipe connecting location, and this excentric position of the heat-exchange arrangement may result in drawbacks with regard to the pattern of air flow adjacent the heat-exchange arrangement, or with respect to the temperature distribution in the room. Furthermore, such excentric positioning of the heat-exchange arrangement may cause difficulties in placing said arrangement together with ceiling-mounted lamp fittings and the like in an aesthetically attractive fashion.

Furthermore, the screen elements of the known arrangements are intended to provide a given through-flow (per unit of time) and air velocity (within certain limits) for all applications.

An object of the present invention is to provide a ceiling-mounted heat-exchange arrangement which will enable the subsequent installation of air-distributing screen elements which can be chosen freely, with respect to the desired air through-flow (velocity and rate of flow) from among several different screen elements, in new installations or in the case of reconstructions in which the requirements have been changed. Another object of the invention is to enable the main parts of the arrangement to be installed at any desired stage of construction, and to enable the screen elements to be fitted in a late stage of construction, wherein the screen may also be allowed to accommodate piping and/or additional heat-exchanger units in the space defined by the primary heat-exchanger and the screen walls. A further object of the invention is to enable the screen element to be displaced in the longitudinal direction of the arrangement.

Further objects of the invention will be apparent from the following description.

The objects of the invention are achieved with the arrangement defined in the following Claim 1. Further embodiments of the invention are defined in the following dependent Claims.

One important technical effect or advantage afforded by the present invention is that the arrangement can be readily adapted to the requirements applicable to a given room with one and the same principle basic construction, by appropriate selection of a screen element, due to the fact that such elements can be readily fitted and dismantled. For example, it is possible to select a screen element whose construction with respect to area, size and the configuration of the perforating openings is such that the air will flow into the room beneath the arrangement at the rate desired or required, for instance in accordance with a calculated value. This presumes that a plurality of mutually different types of screen are available or can be produced at short notice. Similarly, the invention affords the simple possibility of modifying the arrangement at low cost if the room-temperature requirements change, for example if heating of a room is excessive, by exchanging the original screen plates for other screen plates that are provided with a different perforation pattern which will provide the desired flow rate and flow velocity necessary to satisfy the new conditions (for example, an increased cooling requirement in the room), while retaining the major parts of the original installation.

The invention thus enables the arrangement to be adapted to prevailing requirements, essentially solely by appropriate selection of the design of the screen element and installation/replacement of said element, and also enable additional heat-exchangers to be installed in an existing installation, if so required.

The bottom parts of the screen plates form legs of a generally U-shaped screen element whose downwardly facing web, and also said legs, may be constructed to visually screen the heat-exchanger and also extend substantially between the room walls. This construction provides advantages, particularly in those intances when the heat-exchanger is not integrated in a substantially fully-covering ceiling, i.e. in those instances when the whole of the arrangement is exposed. The screen element affords essential visual screening of the central parts of the heat-exchanger and can be readily fitted in a late stage of the building construction. This greatly reduces the risk of damage to the screen element. Furthermore, it provides the advantage of enabling the screen element to be manufactured separately and packaged safely against damage, and also to be transported under favourable conditions to the building site, where it can be fitted in a late stage of said construction work.

Because the screen element is separate component and is suspended from a simple, detachable joint, there is afforded the additional advantage that the element can be move longitudinally in relation to the heat-exchanger and the heat-exchange unit. Thus, the screen element can be positioned so as to cover and bridge fluid conducting pipes, for instance from a wall to the actual heat-exchanger itself. Naturally, the screen element can be readily given any desired length, such as to extend over the full dimensions of the room, for instance for aesthetic reasons, wherewith the screen can be easily be joined to another screen element, if so desired. Thus, the screen can be produced in length units which are joined together and cut into other lengths, if so desired. Naturally, the aforedescribed technique enables a screen to be replaced readily if so required, for example if a screen becomes damaged, or for some other reason. The readily fitted/dismantled joint between the legs or side members of the screen element and the side screens may involve providing the side screens at their lower edge with an edge flange which is angled outwardly through slightly more than 90° and which engages a corresponding outwardly angled edge flange via the upper edge of the screen element walls. It will be understood from this that the screen element can be readily displaced longitudinally in relation to the heat-exchanger.

Favourable conditions for storage and transportation of the screen elements while retaining satisfactory protection in transportation can be achieved by constructing the screen elements in a manner which will enable them to be stacked one within the other. This will, of course, also provide important advantages from the aspect of transportation costs.

If required by the prevailing cooling requirements of the space in question, a further heat-exchange unit can be installed immediately beneath the heat-exchanger of said heat-exchange unit and suspended from said heat-exchanger in said space with the aid of appropriate fittings.

In this case, the spacing between the flanges of the bottom heat-exchanger will be much greater than the flange spacing of the top heat-exchanger.

The heat-exchange arrangement may, of course, also include a heating arrangement, for instance in the form of hot water pipes, which are arranged to deliver heat to the surroundings, by radiation and/or convection, through the medium of surface enlarging elements.

When the heat-exchange arrangement is not fully incorporated in the ceiling, i.e. does not form part of the actual ceiling structure, the heating arrangement may be carried by the beams which support the heat-exchange unit and the upper screen parts, which may be supported on either side of the heat-exchange unit.

When the heat-exchange arrangement is integrated in a ceiling, the web of the U-shaped screen element may have the form of separate bands or struts which need not have any visual screening function, but merely need to connect the legs and optionally also to serve as carrier means for a baffle plate which limits the outflow area of cold air, wherein said plate may carry a heating arrangement. In this latter, general embodiment, the walls of the screen element may be imperforate, such as to conduct the cooled air flow down to the area beneath the surface of the ceiling.

In the case of the described arrangement, there can be selected a heat-exchanger length which is mainly dependent on the cooling/heating effect required and on the available heat-exchange units. The heat-exchange unit or units belonging to one row can be hidden behind a screen element of desired length, wherein the screen element also completes the heat-exchange units to an effective convention height. In addition, an air supply pipe may be positioned in the screen element so as to be hidden from view, and the exhaust air location can be readily placed in any desired position along the screen element/heat-exchange units. The air supply pipe is supported separate from the heat-exchange units. Furthermore, there can be selected a screen element which will provide a given rate of air flow beneath the arrangement and a given flow of air through said arrangement. This screen element can be readily replaced by another screen element having a different configuration of perforations when wishing to change the rate of air flow or/and the flow of air through said arrangement.

The invention will now be described in more detail with reference to exemplifying embodiments thereof and also with reference to the accompanying schematic drawings.

Figure 1 is a schematic, vertical section view of an installed arrangement.

Figure 2 is a schematic cross-section view of the arrangement shown in Figure 1, taken on the line I-I in Figure 1.

Figure 3 illustrates joining of a screen element and associated joining piece and end-wall.

Figure 4 illustrates schematically the connecting region between two heat-exchange units and an associated joining piece.

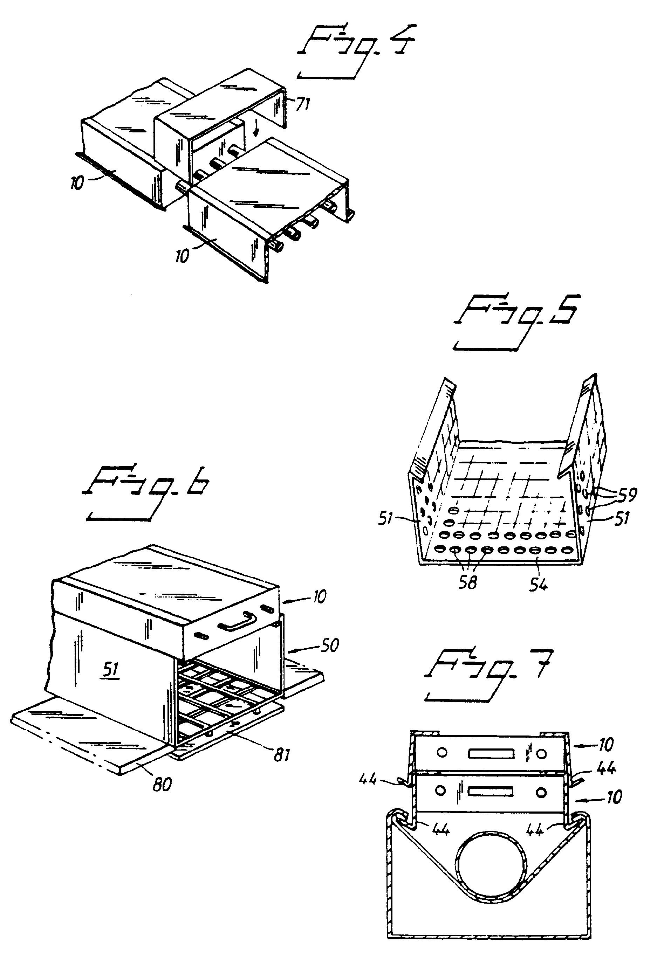

Figure 5 illustrates in perspective a screen element for the type of arrangement illustrated in Figure 1.

Figure 6 is a schematic cross-section view of the arrangement installed in a ceiling.

Figure 7 is a sectional view of an arrangement provided with double heat-exchange units.

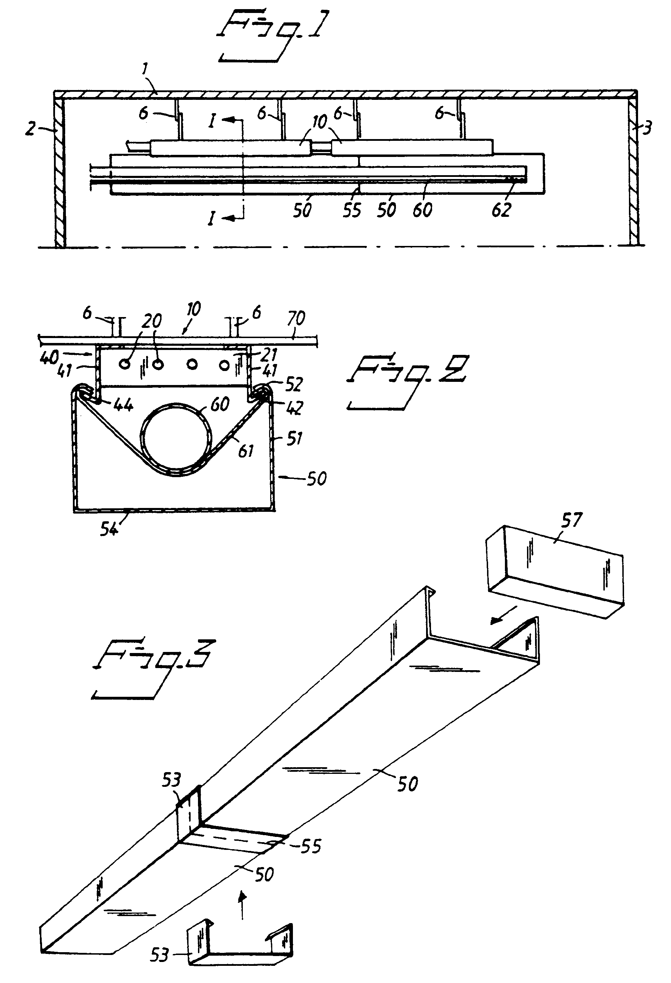

Shown in Figure 1 are two mutually opposing walls 2, 3 and the ceiling 1 of a room, and shows a heat-exchange arrangement suspended from the ceiling 1 by means of fittings 6.

Referring to Figure 2, it will be seen that the heat-exchange arrangement includes two heat-exchange units 10 which are mutually connected together and each of which includes a heat-exchanger 20, 21 which is constructed from horizontal, cooling-water conducting pipes 20 which have mutually parallel, vertical flanges of rectangular shape. The unit also includes vertical screen plates, generally referenced 40, which are disposed on each long side of the elongated heat-exchanger 20, 21 and extend downwardly therefrom such as to define a convection height for the air cooled in the heat-exchange unit 10. By "convection height" is meant that the heat-exchange arrangement forms a vertical shaft in which the cooled air sinks to a lower level and establishes a requisite flow of air down through the heat-exchange unit, for cooling purposes.

The screen plates, generally referenced 40, include side screens 41 which are connected to two opposing side surfaces of the heat-exchanger 20, 21 such as to screen said side surfaces laterally, and also includes leg walls 51 which are detachably connected to the side screens 41 and which form part of a bottom screen element 50 of general U-shaped configuration. The leg walls 51 are connected to the bottom edge or rim of the side screens and extend downwardly from said screens. The bottom edge or rim of the side screens 41 has an upwardly bent flange 42 and the walls 51 of the screen elements 50 have a downwardly and inwardly bent flange 52 at the upper edge or rim of said walls, such as to engage the flange 42 and therewith support the screen element 50.

The height extension of the walls 51 is greater than the diameter of an air supply duct 60 which is accommodated in the screen element 50 beneath the heat-exchange unit 10 and which is supported from the screen flanges 42 of the unit 10 by means of a stirrup-shaped bracket 61 whose ends are inwardly bent to form hooks which grip around the screen flanges 42.

The heat-exchange unit 10 also preferably includes transverse support rails 70 which are connected to the side screens 41. The bottom ends of the fittings 6 are connected to the rails 70 and the ends of said rails may be collared away from the heat-exchange unit 10, for instance to enable said rails to carry heat-radiating elements (not shown) of known design. The person installing the arrangement is aware of the prevailing cooling requirements, and accordingly installs one or more rows of heat-exchange arrangements in the room whose air is to be attemperated. Each row then comprises one or more heat-exchange units of standard type, said units together satisfying the cooling requirement of that row. The heat-exchange units of one row of such units have mutually similar cross-sectional shapes and the heat-exchange units chosen have standard lengths, such that the row of units will achieve the desired cooling effect.

In a simple case, this may mean that the arrangement will include two series-connected units 10, as illustrated in Figure 1, which are connected to cooling water pipes accessible at the wall 2. Also accessible at the wall 2 is a supply air connection, to which the duct 60 is connected.

The units 10 are suspended by means of the fittings 6 and are directed towards one another and arranged in mutual positions which will provide the best conditions with regard to the flow of cooling air into the room. It may be desirable, in the case of the illustrated room, for the supply air location 62 to be positioned at the wall 3, and hence the duct 60 must extend generally transversely across the full width of the room.

The screen elements 50, which may have one or several standard lengths, may be mounted on the units 10 and displaced laterally thereon and mutually joined so that, together, they form a screen of desired length and desired lateral positioning in the room, so that the screen will provide an aesthetically attractive arrangement and cover the air supply pipe 60 and the units 10. The screen elements 50 may, of course, be cut to desired lengths. The screen elements are laterally displaceable and the flanges of the side screens and the joins between adjacent screen elements 50 can be covered with U-shaped joining plates 53, and the ends of the screen element 50 can be covered with an end-wall plate 57, as illustrated in Figure 3.

The joins 55 between respective screen elements 50 are preferably placed between the ends of a heat-exchange unit 10, so that the joining plate 53 is afforded full support an the flange 42.

A generally U-shaped screen plate 71 is preferably fitted over the gap between mutually adjacent units 10, such as to guide the air flow to be cooled onto the flanged parts of the heat-exchange units.

The screen element 50 is provided with openings 58 over its bottom surface 54, so as to enable the cooled air to pass downwardly, and in the type of arrangement illustrated in Figure 1, the side walls 51 of the element are also perforated with openings 59. The walls 51 have the ability to provide the desired convection height, despite being perforated.

In the case of embodiments in which the inventive arrangement is built into a ceiling 80, the screen walls 51, on the other hand, should be imperforate and impervious, so as not to conduct cooled air onto the upper surface of the ceiling 80. In the Figure 6 illustration, the ceiling 80 lies flush with the web 54 of the U-shaped screen element 50. In this case, the web is perforated with openings of an effective size and, naturally, the openings may be disposed in an aesthetically attractive pattern. However, the web 54 may function generally to form a spacer means for the walls 51 of the element 50, wherein said spacer means can be used to support a baffle plate 81 which functions to deflect the passing flow of cooled air out over the bottom surface of the ceiling. The baffle plate 81 may also form a conventional heat-radiating element when additional heat is required.

As illustrated in Figure 7, the inventive arrangement may include mutually stackable units 10 which are connected together by means of connectors not shown. It will be seen in particular that the side screens 41 illustrated in Figure 2 have lower edge portions 44 which project down beyond the flanges 21 and thereby form, together with the flanges 21, a recess or channel which receives the upper part of a unit 10. The bottom edge parts 44 of the side screens 41 are preferably angled outwards slightly to this end, or may be deformed in a manner to make the stacking arrangement shown in Figure 7 possible.

The present invention enables the heat-exhange units and the air duct to be hidden with the aid of screen element which can be fitted in any desired position along the units 10 and connected to adjacent screen elements 50 to form a screen of desired length. This provides complete freedom with respect to the position of the supply air device axially on the pipe or conduit 60.

The flanges 21 may be formed from thin aluminium plate which is in heat-exchange contact with the pipes 20 via studs, and the plate flanges 21 may have a rectangular configuration and extend parallel to one another.

In the case of the Figure 7 embodiment, the spacing between the flanges on the bottom unit 10 is greater than the spacing between the flanges on the upper unit. For instance, the spacing between the flanges on the bottom unit may be essentially twice that of the spacing between the flanges of the top unit.

It will be seen that several different types of screen elements with mutually different degrees of perforation, perforation configurations, perforation sizes, perforation distribution and total perforation area per unit of length can be obtained at relatively low costs, so that by selecting and fitting an appropriate type of screen element from among all available types, the flow rate of the air beneath the arrangement can be caused to correspond to a precalculated suitable value. It will also be seen that it is possible to change the convection height of a standardized heat-exchanger by using in the heat-exchange arrangement screen elements which have leg walls of mutually different height dimensions.

The invention also enables the air flow rate and/or the air flow pattern beneath the arrangement to be readily changed, by exchanging screen elements if, for instance subsequent to installing the arrangement, it is found that the calculated, desired air flow rate or air flow pattern is not obtained with the installed, precalculated and dimensioned arrangement with associated screen elements.

## Claims

1. A ceiling installed heat-exchange arrangement for attemperating room air, comprising a heat-exchange unit (10) which includes a heat-exchanger (20, 21) comprising horizontal cooling-water conducting pipes (20) having mutually parallel and vertical cooling flanges, and vertical screen plates (40) which are disposed on each side of the elongated heat-exchanger (20, 21) and which extend downwardly therefrom to define a convection height for the air cooled in the unit (10), **characterized** in that the screen plates (40) are constructed from side screens (41) which are connected to two opposing sides of the heat-exchanger (20, 21) such as to screen said sides laterally, and leg walls (51) which belong to a bottom generally U-shaped screen element (50) and which are detachably connected to the bottom edge part of the side screens (41).

2. An arrangement according to Claim 1, **characterized** in that the bottom edges of the side screens (41) have an edge lip (42) which is angled outwardly by more than 90°; and in that the free edge of the leg walls (51) of the screen element have a correspondingly inwardly angled edge lip (52) which engages around the edge lips (42) of respective side screens.

3. An arrangement according to Claim 1 or 2, **characterized** in that the screen element (50) has a height dimension such as to enable a supply air duct (60) to be accommodated in the space between the screen element (50) and the heat-exchange unit (10); and in that the arrangement also includes stirrup-shaped duct support devices (61) whose end parts are curved such as to grip around the edge lips of respective side screens.

4. An arrangement according to any one of Claims 1-3, **characterized** in that the side screens (41) at their respective lower edge portions (44) project downwardly beyond the lower defining surface of the heat-exchanger (20, 21) such as to form a lower guide channel in which the upper part of a heat-exchange unit can be accomodated when mutually stacking heat-exchange units.

5. An arrangement according to any one of Claims 1-3, **characterized** in that the screen element (50) is provided, at least in its bottom part, with openings through which air cooled in said unit can pass.

6. An arrangement according to any one of Claims 1-5, **characterized** in that the connection (42, 51) by means of which the screen element (50) is detachable connected to the side screens (41) is intended to enable the screen element to be positioned selectively in the longitudinal direction relative to the side screens (41).

## Patentansprüche

1. In eine Decke einbaubare Wärmeauschtauschanordnung zur Regulierung der Raumlufttemperatur mit einer Wärmetauscheinheit (10), die einen Wärmetauscher (20, 21) mit horizontalen Kühlwasser-Leitungsrohren (20) umfaßt, die rechtwinklig abstehende, zueinander parallele und vertikale Kühlflansche und vertikale Abschirmplatten (40) aufweisen, die auf jeder Seite der langgestreckten Wärmetauscher (20, 21) angeordnet sind und sich von diesen nach unten erstrecken, um eine Konvektionshöhe für die Luft zu definieren, die von der Einheit (10) abgekühlt wird,
dadurch gekennzeichnet, daß die Schirmplatten (40) von Seitenschirmen (41) gebildet sind, die an zwei gegenüberliegenden Seiten der Wärmetauscher (20, 21) derart angeschlossen sind, daß die Seiten abgeschirmt werden und daß die Stegwände (51), die zu einem unteren, im allgemeinen U-förmig gestalteten Schirmelement (50) gehören, abnehmbar am unteren Randabschnitt der Seitenschirme (41) befestigt sind.

2. Wärmetauschanordnung nach Anspruch 1,
dadurch gekennzeichnet, daß die unteren Ränder der Seitenschirme (41) eine Randlippe (42) aufweisen, die nach außen über mehr als 90° abgewinkelt ist, und daß die freie Wand der Schenkelwände (51) eine entsprechende nach innen abgewinkelte Randlippe (52) besitzt, die die Randlippen (42) der jeweiligen Seitenschirme umgreift.

3. Wärmetauschanordnung nach den Ansprüchen 1 oder 2,
dadurch gekennzeichnet, daß das Schirmelement (50) eine solche Höhenabmessung aufweist, daß ein Luftzuführungskanal (60) in den Raum zwischen das Abschirmelement (50) und die Wärmetauscheinheit (10) eingebaut werden kann, und daß die Anordnung außerdem einen bügelförmigen Kanalträger (61) besitzt, dessen Endteile so gekrümmt sind, daß sie die Randlippen der jeweiligen Seitenschirme umgreifen.

4. Wärmetauschanordnung nach einem der Ansprüche 1 bis 3,
dadurch gekennzeichnet, daß die Seitenschirme (41) an ihren jeweiligen unteren Randabschnitten (44) nach unten über die die untere Fläche der Wärmetauscher (20, 21) definierende Oberfläche derart vorstehen, daß ein unterer Führungskanal erzeugt wird, in den der obere Teil einer Wärmetauscheinheit eingebaut werden kann, wenn die Wärmetauscheinheiten übereinander gestapelt werden.

5. Wärmetauschanordnung nach einem der Ansprüche 1 bis 3,
dadurch gekennzeichnet, daß das Schirmelement (50) wenigstens in seinem unteren Teil mit Öffnungen versehen ist, durch die in der Einheit gekühlte Luft hindurchtreten kann.

6. Wärmetauschanordnung nach einem der Ansprüche 1 bis 5,
dadurch gekennzeichnet, daß die Verbindung (42, 51) durch die das Schirmelement (50) abnehmbar an den Seitenschirmen (41) befestigt ist, die Möglichkeit schafft, daß die Schirmelemente selektiv in Längsrichtung relativ zu den Seitenschirmen (41) angeordnet werden können.

## Revendications

1. Un dispositif d'échange de chaleur installé au plafond pour climatiser l'air d'une pièce, comprenant une unité d'échange de chaleur (10) qui comprend un échangeur de chaleur (20, 21) comportant des tubes horizontaux d'amenée d'eau de refroidissement (20), munis de brides de refroidissement mutuellement parallèles et verticales, et des plaques verticales (40) formant écran , qui sont disposées de chaque côté de l'échangeur de chaleur allongé (20, 21) et qui s'étendent localement vers le bas depuis l'échangeur, pour définir une hauteur de convection pour l'air refroidi dans l'unité (10), caractérisé en ce que les plaques formant écran (40) sont réalisées à partir d'écrans latéraux (41) reliés aux deux faces opposées de l'échangeur de chaleur (20, 21), de manière à fermer latéralement lesdites faces, et de parois formant jambes (51) qui appartiennent à un élément de fond formant écran (50), et en forme générale de U et qui sont reliées de façon amovible à la partie de bord inférieur des écrans latéraux (41).

2. Un dispositif selon la revendication 1, caractérisé en ce que les bords inférieurs des écrans latéraux (41) comportent une lèvre de bord (42) formant un angle vers l'extérieur de plus de 90°; et en ce que les bords libres des parois formant jambes (51) de l'élément formant écran sont munis d'une lèvre de bord (52) formant un angle correspondant vers l'intérieur, et qui s'engage autour des lèvres de bord (42) des écrans latéraux respectifs.

3. Un dispositif selon la revendication 1 ou 2, caractérisé en ce que l'élément formant écran (50) présente une hauteur telle qu'elle permettte à un conduit d'amenée d'air (60) d'être logé dans l'espace entre l'élément formant écran (50) et l'unité d'échange de chaleur (10); et en ce que le dispositif comprend également des organes de support de conduit (61) en forme d'étrier et dont les parties d'extrémité sont incurvées de manière à s'accrocher autour des lèvres de rebord des écrans latéraux respectifs.

4. Un dispositif selon l'une quelconque des revendications 1 à 3, caractérisé en ce que les écrans latéraux (41), à leurs parties de bord inférieur respectives (44), font saillie vers le bas, au-delà de la surface de délimitation inférieure de l'échangeur de chaleur (20, 21), de manière à former un canal de guidage inférieur dans lequel peut être logée la partie supérieure d'une unité d'échange de chaleur, lorsque l'on empile des unités d'échange de chaleur les unes sur les autres.

5. Un dispositif selon l'une quelconque des revendications 1 à 3, caractérisé en ce que l'élément formant écran (50) est pourvu, au moins dans sa partie inférieure, d'ouvertures à travers lesquelles peut passer l'air refroidi dans ladite unité.

6. Un dispositif selon l'une quelconque des revendications 1 à 5, caractérisé en ce que la liaison (42, 51) au moyen de laquelle l'élément formant écran (50) est relié de façon amovible aux écrans latéraux (41) est destinée à permettre à l'élément formant écran d'être disposé sélectivement dans la direction longitudinale par rapport aux écrans latéraux (41).
